**Europäisches Patentamt**

**European Patent Office**

**Office européen des brevets**

(11) Veröffentlichungsnummer: **0 334 401**

**A2**

## (12) EUROPÄISCHE PATENTANMELDUNG

(21) Anmeldenummer: **89200232.0**

(22) Anmeldetag: **17.01.89**

(51) Int. Cl.4: **F16K 11/07 , F16K 37/00 , F16K 25/02**

(30) Priorität: **20.01.88 DE 3801569**

(43) Veröffentlichungstag der Anmeldung:
**27.09.89 Patentblatt 89/39**

(84) Benannte Vertragsstaaten:
**ES GR**

(71) Anmelder: **Mieth, Hans Otto, Dipl.-Ing.**
**Sandkrug 3**
**D-2058 Schnakenbek(DE)**

(72) Erfinder: **Mieth, Hans Otto, Dipl.-Ing.**
**Sandkrug 3**
**D-2058 Schnakenbek(DE)**

(74) Vertreter: **DIEHL GLAESER HILTL & PARTNER**
**Patentanwälte Königstrasse 28**
**D-2000 Hamburg 50(DE)**

(54) **Verfahren zur Steuerung des Mediumeintrittes in wenigstens einem Leckageraum einer Ventilvorrichtung und Vorrichtung zu seiner Durchführung.**

(57) Die Erfindung betrifft ein Verfahren zur Steuerung des Mediumeintrittes in wenigstens einen Leckageraum einer Ventilvorrichtung nach dem Oberbegriff des Anspruchs 1.

Durch das vorgeschlagene Verfahren wird in Anwendung auf ein Mehrwege-Umschaltventil, das an sich in seinem Aufbau schon neu ist, eine Ventilvorrichtung geschaffen, die hinsichtlich der gegebenen Schaltfunktionen und seiner Eigenschaften, insbesondere der Leckagesicherheit jedes einzelnen Sitzbereiches, neu ist.

Dies wird unter anderem verfahrenstechnisch dadurch erreicht, daß in der von der Grundstellung abweichenden Stellung der Ventilvorrichtung am jeweils umgeschalteten Ventilsitz eine Substitution des des Leckageraum von dem Innenraum jeweils absperrenden Schließgliedes bzw. Verschlußteils durch das jeweils andere vorgesehen wird

Fig. 7     Fig. 8

Xerox Copy Centre

EP 0 334 401 A2

# Verfahren zur Steuerung des Mediumeintrittes in wenigstens einen Leckageraum einer Ventilvorrichtung und Vorrichtung zu seiner Durchführung

Die Erfindung betrifft ein Verfahren zur Steuerung des Mediumeintrittes in wenigstens einen Leckageraum einer Ventilvorrichtung nach dem Oberbegriff des Anspruchs 1 und eine Vorrichtung zu seiner Durchführung.

Der bislang bekannt gewordene Stand der Technik auf dem Gebiet der sogenannten Mehrwege-Umschaltventile mit Leckagesicherung ist beispielsweise aus der DE-PS 20 27 792 ersichtlich. Dieses Ventil befriedigt in seiner Reinigungs-und/oder Sterilisierstellung (vergl. Spalte 5, Zeilen 40ff.) die zu stellende Mindestanforderung, daß nämlich jederzeit mindestens zwei Abdichtungen zwischen dem zu verpackenden Füllgut und beispielsweise einem Reinigungsmittel für die Gefäße vorhanden sein müssen und daß der Raum zwischen den Abdichtungen mit einem Reinigungsmittel gespült werden muß. Gemäß der aus dem Bereich der Pneumatik entlehnten Kennzeichnung stellt das bekannte Ventil ein sogenanntes 4/2-Wegeventil dar, denn es verfügt über vier Anschlüsse (drei Gehäuseanschlüsse, ein Leckageraumanschluß) und zwei Schaltstellungen. Eine Grundstellung, in der das Ventil vom mittleren Ventilgehäuseteil aus, entweder beiderseits offen oder geschlossen ist, ist nicht gegeben. Darüber hinaus wird aus Figur 2 der vorgenannten Druckschrift ersichtlich, daß in der dort dargestellten Füllstellung des Ventils nur eine einfache Abdichtung zwischen dem mittleren Ventilgehäuseteil 3 und dem unteren Ventilgehäuseteil 4 vorhanden ist. Während in dieser Stellung Produkt vom oberen Ventilgehäuseteil 2 in das mittlere Ventilgehäuseteil 3 überführt wird, kann grundsätzlich im unteren Ventilgehäuseteil 4 Reinigungsmittel unter Druck anstehen. Eine schadhafte Dichtung im unteren Sitzbereich oder ein Druckstoß aus dem unteren Ventilgehäuseteil 4 würde in diesem Falle zu einer Vermischung von Produkt und Reinigungsmittel führen, da der untere Sitzbereich nicht leckagegesichert ist.

Darüber hinaus beschreibt die Patentanmeldung P 37 01 027.1 ein Ventil mit einem Leckageraum, welches mit zwei Abdichtungsstellen ausgestattet ist, die seriell angeordnet sind und in der Schließstellung des Ventils das Überströmen von Fluiden von einem Ventilgehäuseteil in ein anderes verhindern. Dabei ist der Leckageraum zwischen den Abdichtungsstellen angeordnet und über das Ventilgehäuse mit der Umgebung des Ventils verbunden. Mit diesem sogenannten Doppelsitzventil wird die verfahrenstechnisch Aufgabe gelöst, neben der in der Schließstellung des Ventils an sich bekannten Steuerung des Mediumeintrittes vom Innenraum zum Leckageraum, den Eintritt auch in anderen Stellungen des Ventils zu steuern. Die Lösung der verfahrenstechnischen Aufgabe gelingt dadurch, daß die Verbindung zwischen dem Leckageraum und dem Innenraum in anderen Stellungen als in der Schließstellung des Ventils wirkungsmäßig in gleicher Weise wie in der Schließstellung durch eine das Schließglied hinsichtlich seiner Wechselwirkung mit dem Leckageraum substituierende Vorkehrung gesteuert wird. Hinsichtlich der gegenständlichen Realisierung ist unter anderem ein Verschlußteil vorgesehen, welches zu dem Schließglied relativ beweglich in Richtung dessen Bewegungsfreiheitsgrades angeordnet ist und die Verbindung zwischen dem Leckageraum und dem Innenraum der Ventilgehäuseteile steuert. Dabei hat, zumindest in der Offenstellung des Ventils, das Verschlußteil permanent Kontakt mit den beiden Abdichtungsstellen, wobei diese durch ventilgehäuseseitig oder schließglied- bzw. verschlußteilseitig angeordnete Dichtungsmittel realisiert werden.

Aus der vorgenannten Patentanmeldung ist auch eine Dichtungsanordnung mit zwei voneinander getrennten, ventilgehäuseseitig angeordneten Dichtungen bekannt, wobei in der die Priorität dieser Patentanmeldung beanspruchenden Euro-PCT-Anmeldung (WO 88/05512) diese beiden diskreten Dichtungen unter anderem als Dichtungen mit kreisförmigem Querschnitt ausgebildet sind.

Ausgehend vom aufgezeigten Stand der Technik liegt der Erfindung die Aufgabe zugrunde, ein Verfahren zur Steuerung des Mediumseintritts in wenigstens einen Leckageraum einer Ventilvorrichtung zu schaffen, wobei die Ventilvorrichtung mehr als zwei Ventilgehäuseteile mit Zu- und Ablaufgehäuseteilen aufweist und insbesondere mit steuerbaren Verbindungen zwischen Leckageraum und Innenraum des Ventilgehäuses ausgebildet ist.

Die Lösung der Aufgabe erfolgt durch Anwendung der Kennzeichenmerkmale des Anspruchs 1 oder 2, wobei das erfindungsgemäße Verfahren die Ventilvorrichtung mit Schaltfunktionen und Eigenschaften ausstattet, die neu und vorteilhaft sind.

Vorteilhafte Ausführungsformen der Ventilvorrichtung zur Durchführung des vorgenannten Verfahrens sind in den Unteransprüchen 3 bis 12 beschrieben. Es zeigt sich, daß dabei eine Ventilvorrichtung vorgeschlagen wird, die bislang in ihrem Aufbau unbekannt ist.

Mit der vorgeschlagenen Erfindung ist die Realisierung einer komplexen Ventilvorrichtung mit drei Ventilgehäuseteilen, fünf Anschlüssen und drei Schaltstellungen möglich. Dabei ergibt sich bei Ausbildung des jeweiligen Sitzbereiches mit einem Leckageraum, der zwischen zwei Dichtungen ausmündet, eine neue, bislang unbekannte Anordnung, die eine bis heute bei bekannten Ventilen dieser Bauart nicht realisierbare Schaltfunktion, nämlich die gleichzeitige Schließstellung der beiden äußeren Ventilgehäuseteile gegenüber dem mittleren Gehäuse, ermöglicht und wobei zusätzlich zwischen zwei benachbarten Ventilgehäuseteilen jeweils ein Leckageraum ausgebildet ist. In Anlehnung an die Klassifizierung von Ventilen in der Pneumatik stellt dieses neue Ventil ein sogenanntes 5/3-Wegeventil dar. Ein derartiges Ventil weist 5 Anschlüsse und 3 Stellungen (A, B, C) auf. Je nach Bemessung der Schließglieder kann in der mittleren Stellung, A, der sogenannten Grundstellung, das mittlere Ventilgehäuseteil gegenüber den äußeren Ventilgehäuseteilen entweder beiderseits geschlossen oder beiderseits offen sein. In den beiden anderen Stellungen B bzw. C ergibt sich eine Umschaltfunktion zwischen dem mittleren und dem jeweils geschalteten äußeren Ventilgehäuseteil. Der Anschluß des mittleren Ventilgehäuseteils und der äußeren Ventilgehäuseteile ist gemäß der bekannten Nomenklatur mit 1, 2 und 4 gekennzeichnet, während zwei weitere Anschlüsse die Bezeichnung 3 und 5 tragen. Aus der nachfolgenden Tabelle ist ersichtlich, welchen Schaltzustand die jeweiligen Anschlüsse 1 bis 5 in den Stellungen A, B und C einnehmen. Ein geschlossener Anschluß ist mit "0", ein geöffneter Anschluß mit "1" gekennzeichnet.

Schaltzustände eines 5/3-Wegeventils
gemäß Stand der Technik

| Anschluß | Stellung | | |
|---|---|---|---|
| | A | B | C |
| 1 | 0 | 1 | 1 |
| 2 | 0 / 1 | 1 | 1 |
| 3 | 0 / 1 | 1 | 0 |
| 4 | 0 / 1 | 1 | 1 |
| 5 | 0 / 1 | 1 | 1 |

* / **

\* in Grundstellung A geschlossen

\*\* in Grundstellung A offen

Aus der vorstehenden Tabelle wird ersichtlich, daß derartige Ventile in Grundstellung "geschlossen" oder in Grundstellung "offen" existieren (vgl. Spalte A).
Darüber hinaus wird ersichtlich, welche Anschlüsse des 5/3-Wegeventils in der Stellung B bzw. der Stellung C miteinander verbunden sind.
Bei dem Gegenstand gemäß der Erfindung, bei dem es sich, wie vorstehend bereits erläutert, hinsichtlich der Zahl der Anschlüsse und Schaltstellungen um ein 5/3-Wegeventil handelt, stellen die Anschlüsse 3 und 5 jeweils die Verbindung des Leckageraumes zum Innenraum des Ventilgehäuses dar. Erfindungsgemäß ist nun diese Verbindung sowohl in der Schließ- als auch in der Offenstellung des Ventils stets geschlossen. Die nachfolgende Tabelle zeigt die Schaltzustände des Gegenstandes gemäß der Erfindung in Anlehnung an die aus der Pneumatik bekannte Nomenklatur.

EP 0 334 401 A2

Schaltzustände der Ventilvorrichtung
gemäß der Erfindung

| Anschluß | Stellung | | |
|---|---|---|---|
| | A | B | C |
| 1 | 0 / 1 ⌐ | 1 ⌐ | 1 ⌐ |
| 2 | 0 / 1 ⌐ | 0 ⌐ | 1 ⌐ |
| 3 | 0 ⌐ | 0 ⌐ | 0 |
| 4 | 0 / 1 ⌐ | 1 ⌐ | 0 |
| 5 | 0 | 0 | 0 |

* / * *

* in Grundstellung A geschlossen

** in Grundstellung A offen

Aus der vorstehenden Tabelle ist ersichtlich, daß beim erfindungsgemäßen Ventil die Anschlüsse 1, 2 und 4 (Anschluß 1 für das mittlere Ventilgehäuseteil; Anschluß 2 bzw. 4: Anschluß der jeweils äußeren Ventilgehäuseteile) in gleicher Weise wie beim 5/3-Wegeventil gemäß dem Stand der Technik geschaltet werden. In Stellung B ist der Anschluß 1 auf den Anschluß 4, und in Stellung C ist der Anschluß 1 auf den Anschluß 2 durchgeschaltet. Identität zwischen den beiden Lösungen ergibt sich außerdem in der Schaltstellung "in Grundstellung geschlossen". Während beim 5/3-Wegeventil gemäß dem Stand der Technik in Stellung B Anschluß 2 mit Anschluß 3 und in Stellung C Anschluß 4 mit Anschluß 5 verbunden ist, bleiben bei der Ventilvorrichtung gemäß der Erfindung die Anschlüsse 3 und 5 (Verbindung des Leckageraumes zum Innenraum des Ventilgehäuses) auch in diesen Stellungen stets geschlossen.

Betrachtet man die beiden Ventile in ihrer Ausführung "in Grundstellung offen", so stellt man keine Übereinstimmung fest. Während hier beim Ventil gemäß dem Stand der Technik der Anschluß 1 geschlossen bleibt, und die Anschlüsse 2 und 3 bzw. 4 und 5 miteinander verbunden sind, ergibt sich beim Gegenstand gemäß der Erfindung eine Verbindung der Anschlüsse 1, 2 und 4 miteinander, während die Anschlüsse der Leckageräume 3 und 5 sich bestimmungsgemäß in Schließstellung befinden.

Aus der letztgenannten Tabelle wird ersichtlich, daß die erfindungsgemäß vorgeschlagene Ventilvorrichtung ein 5/3-Wegeventil darstellt, das es in dieser Ausprägung und mit den vorstehend genannten Eigenschaften im Ventilbereich, insbesondere im Bereich der Nahrungs- und Getränkemittelindustrie nicht gibt. Neben der Funktion als Umschaltventil existiert eine Grundstellung, in der das Ventil entweder geschlossen oder offen ist. Darüber hinaus ist das Ventil in jedem Sitzbereich leckagegesichert.

Ausgehend von den anwendungstechnischen Erfordernissen kann bei der erfindungsgemäßen Ventilvorrichtung mit drei Ventilgehäuseteilen auch, wie dies eine Ausgestaltung vorsieht, auf beide Leckageräume oder auf einen der beiden Leckageräume verzichtet werden. Es ergibt sich dadurch ein Mehrwege-Umschaltventil ohne oder mit nur einer Leckagesicherung in einem der beiden Sitzbereiche zwischen benachbarten Ventilgehäuseteilen. Für den Fall, daß in einem Sitzbereich auf den Leckageraum verzichtet wird, substituiert das Verschlußteil das Schließglied hinsichtlich seiner Wechselwirkung mit der Dichtung.

Die erfindungsgemäß vorgeschlagene Ventilvorrichtung, die bei entsprechender Bemessung des Schließgliedes und bei Verzicht auf die Grundstellung ohne weiteres in ein sogenanntes 5/2-Wegeventil überführt werden kann, ergibt in Anwendung auf das der vorgenannten Druckschrift DE-PS 20 27 792 zugrundeliegende Problem eine Lösung, bei der auch der untere Ventilsitz leckagegesichert ist.

Während allein der Verzicht auf die Grundstellung bei der Ventilvorrichtung gemäß der Erfindung zu einem 5/2-Wegeventil führt, das den vorgenannten Anforderungen genügt, ergibt sich durch entsprechende längenmäßige Bemessung des Schließgliedes die Möglichkeit, die erfindungsgemäße Ventilvorrichtung, im Gegensatz zum bekannten Ventil, zu einem echten 5/2-Wegeventil auszubilden, da ohne weiteres eine Bemessung derart möglich ist, daß das Schließglied eine Schließstellung einerseits einnimmt, bevor es die Schließstellung andererseits aufgibt. Beim bekannten Mehrwege-Umschaltventil ist beim Schaltungsdurchgang in jedem Fall eine Zwischenstellung in Kauf zu nehmen, bei der das mittlere Ventilgehäuseteil 3 gleichzeitig mit den beiden äußeren Ventilgehäusen 2 und 4 verbunden ist.

Bei der erfindungsgemäß vorgeschlagenen Ventilvorrichtung läßt sich das Verschlußteil oder lassen sich

4

die Verschlußteile zwischen den beiden Schließgliedern anordnen. Alternativ dazu ist auch eine Lösung gegeben, bei der sich jeweils ein Verschlußteil beiderseits eines einzigen Schließgliedes befindet. Im erstgenannten Falle lassen sich sowohl die Schließglieder als auch die Verschlußteile miteinander verbinden, so daß bei uneingeschränkter Funktion der Ventilvorrichtung lediglich von außen zwei Antriebsbewegungen erforderlich sind. Im zweiten Falle ergeben sich hinsichtlich der Ausgestaltung des Antriebes einer derartigen Ventilvorrichtung die gleichen Vorteile.

Während die vorgenannte Ventilvorrichtung uneingeschränktes, leckagefreies Schalten ermöglicht, ergibt sich nach einer weiteren Ausführungsform der Ventilvorrichtung gemäß der Erfindung die Möglichkeit, das Ventil mit nur einer einzigen Antriebsbewegung zu schalten, allerdings unter Verzicht auf das leckagefreie Schalten, d. h. bei Hinnahme einer begrenzten Schaltleckage. Dies gelingt dadurch, daß die Verschlußteile mit dem Schließglied in einem Abstand fest verbunden sind.

Eine weitere Ausführungsform der Ventilvorrichtung gemäß der Erfindung schlägt bei innenseits zwischen den Schließgliedern angeordneten Verschlußteilen deren Zusammenfassung zu einer Verschlußteileinheit vor, wobei letztere relativ beweglich zu dem Schließglied über eine Stange verschoben wird, deren Durchführungsstelle durch das Schließglied in einfacher Weise und unter günstigen Bedingungen durch einen Faltenbalg stoffschlüssig überbrückt werden kann.

Eine andere Weiterbildung der Ventilvorrichtung gemäß der Erfindung sieht vor, daß das Schließglied in seiner axialen Erstreckung durch teleskopartig arbeitende Vorkehrungen verändert wird, wobei der Abstand der Schließglieder durch ein elastisches Verbindungselement stoffschlüssig überbrückt wird. Durch diese Maßnahme wird es möglich, die Ventilvorrichtung mit einer ambivalenten Grundstellung auszustatten, nämlich der Grundstellung "geschlossen" oder der Grundstellung "offen". Die größte axiale Erstreckung des Schließgliedes ist in der Grundstellung des Ventils so zu bemessen, daß das Schließglied beide Sitzbereiche unter Einbeziehung jeweils das gesamten Leckageraumes überdeckt.

In seiner kürzesten axialen Erstreckung ist die Ventilvorrichtung in ihrer Grundstellung vom mittleren Ventilgehäuseteil aus beiderseits offen.

Ein weiterer, nicht unwesentlicher Vorteil ergibt sich bei der Anwendung der erfindungsgemäßen Ventilvorrichtung dann, wenn beispielsweise ein Tankauslauf am mittleren Gehäuseteil angeschlossen wird und die äußeren Ventilgehäuseteile mit Leitungen verbunden sind. Während bei herkömmlichen Anordnungen von Mehrwege-Umschaltventilen alle Bereiche der mit Produkt in Berührung kommenden Mehrwege-Umschaltventilanordnung nur dann erfaßt wurden, wenn entweder beide Leitungen oder wenigstens die entferntere Leitung vom Tank aus mit Reinigungsmittel beaufschlagt wurde, so werden alle Bereiche der erfindungsgemäß vorgeschlagenen Ventilvorrichtung bereits bei einer Reinigung einer der beiden Leitungen vom Tank aus erfaßt.

Ausführungsbeispiele der Erfindung sind in der Zeichnung dargestellt und werden im folgenden näher beschrieben.

Es zeigen:

Figuren 1 bis 3
in vereinfachter schematischer Darstellung einen Mittelschnitt durch eine Ventilvorrichtung gemäß der Erfindung in den drei möglichen Schaltstellungen (Figur 1: in Grundstellung A geschlossen: Figur 2 und Figur 3: die zwei anderen Offenstellungen B, C), wobei ein einziges Verschlußteil innenseits der beiden Schließglieder angeordnet ist:

Figuren 4 bis 6
einen Mittelschnitt durch eine andere Ausführungsform der Ventilvorrichtung gemäß der Erfindung, ebenfalls in den drei möglichen Schaltzuständen, wobei zwei Verschlußteile innenseits der beiden Schließglieder angeordnet sind und eine feste Verbindung aller Verschlußteile und Schließglieder miteinander vorgesehen ist;

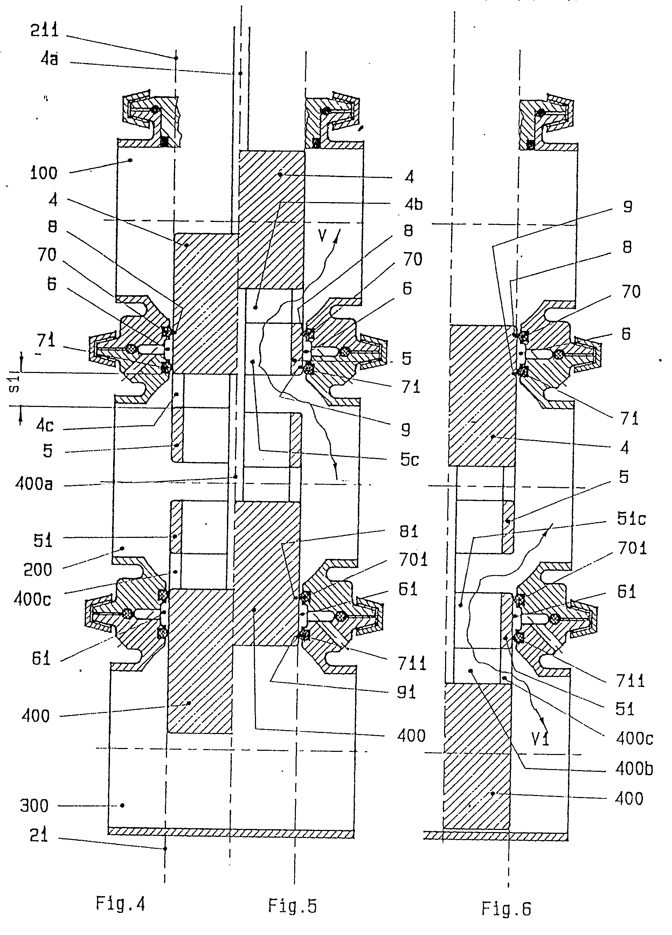

Figuren 7 bis 9
einen Mittelschnitt durch eine weitere vorteilhafte Ausführungsform der Ventilvorrichtung gemäß der Erfindung in den drei möglichen Schaltzuständen, wobei die Verschlußteile und Schließglieder hinsichtlich ihrer Anzahl und Anordnung der Ausführungsform gemäß den Figuren 4 bis 6 entsprechen, jedoch eine relative Beweglichkeit zwischen Schließgliedern und Verschlußteilen gegeben ist;

Figuren 10 bis 12
einen weiteren Mittelschnitt durch eine Ausführungsform der Ventilvorrichtung gemäß der Erfindung in den drei Schaltzuständen, wobei die Verschlußteile beiderseits eines einzigen Schließgliedes angeordnet und mit letzterem fest verbunden sind;

5

Figuren 13 bis 15

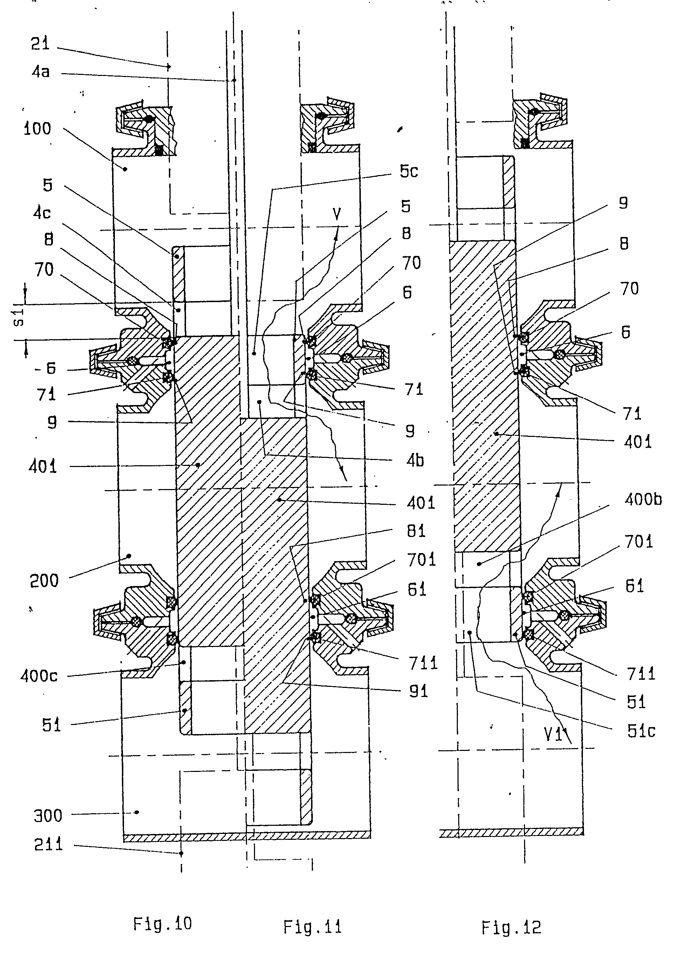

einen Mittelschnitt durch eine weitere vorteilhafte Ausführungsform der Ventilvorrichtung gemäß der Erfindung in den drei Schaltzuständen, wie sie sich aus den Figuren 10 bis 12 ergibt, wobei eine relative Beweglichkeit der Verschlußteile gebenüber dem Schließglied vorgesehen ist;

Figur 16 und Figur 17

in wesentlich vereinfachter, schematischer Darstellung einen Mittelschnitt durch eine andere Ausführungsform der Vorrichtung gemäß der Erfindung in ihrer Grundstellung, wobei die axiale Erstreckung des Schließgliedes teleskopartig veränderbar ist (Figur 16: außenseits der Verschlußteile angeordnete Schließglieder; Figur 17: innenseits der Verschlußteile angeordnetes Schließglied).

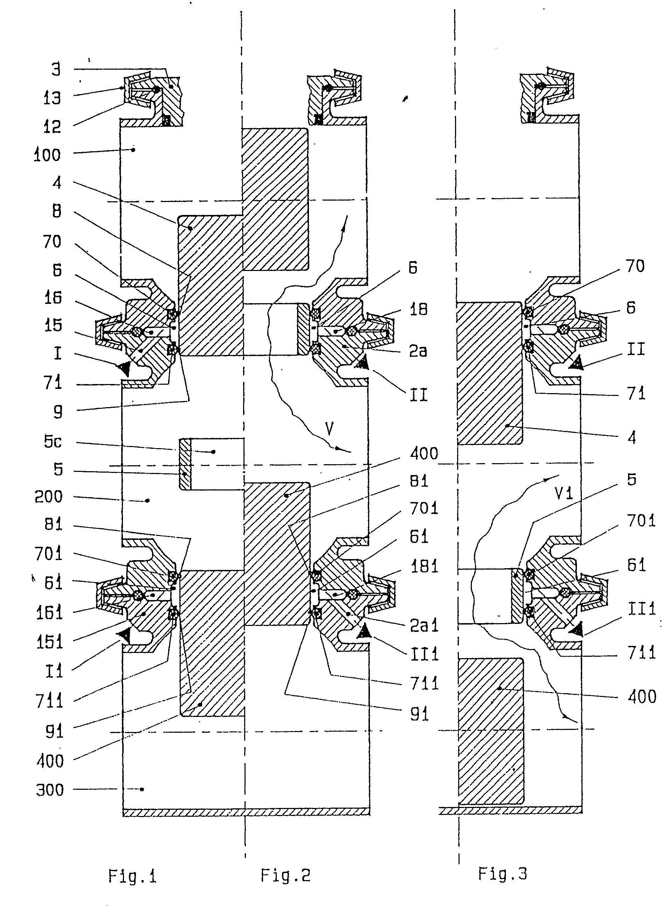

Figur 1 zeigt eine Ventilvorrichtung mit einem zwischen den beiden Schließgliedern 4 bzw. 400 innenseits angeordneten Verschlußteil 5. Die Ventilvorrichtung mit den drei Gehäuseteilen 100, 200 und 300 befindet sich in ihrer Grundstellung A, in der sie vom mittleren Ventilgehäuseteil 200 aus beiderseits geschlossen ist.

In den Figuren 2 und 3 sind die beiden Offenstellungen B bzw. C der Ventilvorrichtungen dargestellt, wobei sich in Figur 2 das obere Schließglied in seiner Offenstellung befindet und das Verschlußteil 5 dessen in der Schließstellung eingenommene Lager gegenüber den Dichtungen 70 und 71 substituiert. Das untenliegende Schließglied 400 ist so bemessen, daß es in der gezeigten Schaltstellung den untenliegenden Sitzbereich mit den Dichtungen 701 und 711 noch nicht verlassen hat.

In Figur 3 befindet sich das untenliegende Schließglied 400 in seiner Offenstellung, das einzige Verschlußteil 5 hat die Lage des Schließgliedes in dessen Schließstellung gegenüber den Dichtungen 701 und 711 substituiert. Dabei ist das obenliegende Schließglied 4, in gleicher Weise wie das untenliegende, derart bemessen, daß die Ventilgehäuseteile 100 und 200 noch gegeneinander verschlossen sind. In jedem Falle sind die Dichtungen 70 und 71 bzw. 701 und 711 entweder von dem Schließglied 4 bzw. 400 oder von dem Verschlußteil 5 berandet. Zwischen den Dichtungen 70 und 71 befindet sich der Leckageraum 6 und zwischen den Dichtungen 701 und 711 der Leckageraum 61. Durch die Art der Schraffur ist in den Figuren 1 bis 3 angedeutet, daß die Schließglieder 4 und 400 in jedem der gezeigten Schaltzustände gleichen Abstand voneinander haben, so daß eine Verbindung beider und eine Betätigung über eine einzige von außerhalb der Ventilvorrichtung herangeführte, nicht dargestellte Stange möglich ist. Das Verschlußteil 5 erfordert einen eigenen Antrieb, dessen erforderlicher Schalthub kleiner ist als jener für die Schließglieder. Das Verschlußteil 5 mit seiner Durchtrittsöffnung 5c erlaubt den vorstehend "Innendurchgang" genannten Durchtritt der Strömung V vom mittleren Gehäuseteil 200 zum oberen Gehäuseteil 100 oder umgekehrt.

In der in Figur 3 dargestellten Lage des Verschlußteils 5 ist die entsprechende Durchtrittsströmung über die Durchtrittsöffnung 5c mit V1 gekennzeichnet. Aufbau und Funktion der übrigen Bauteile im Bereich der Ventilgehäuseteile 100 und 200 sind aus der Patentanmeldung P 37 01 027.1 und aus der die Priorität dieser Patentanmeldung beanspruchenden Euro-PCT-Anmeldung WO 88/05512 bekannt. Dies betrifft insbesondere ein Gehäuseverschlußteil 3, eine Gehäusedichtung 12 und ein Verbindungsmittel 13, eine erste und eine zweite Abdichtungsstelle 8 bzw. 9, eine Anschlußöffnung 15, einen Kanal 16 und einen Sammelkanal 18, eine Ablauföffnung 2a, aus der die mit II bezeichnete Reinigungsflüssigkeit oder die Leckage austritt. Der Eintritt der Reinigungsflüssigkeit über die Anschlußöffnung 15 ist mit I bezeichnet.

Der zwischen den Ventilgehäuseteilen 200 und 300 vorgesehene Sitzbereich ist völlig identisch zu jenem zwischen dem Ventilgehäuseteil 100 und 200 ausgebildet. Teile in diesem Sitzbereich wurden, im Unterschied zu gleichen Teilen im oberen Sitzbereich, hinsichtlich ihrer Kennung durch Anfügen der Ziffer 1 an die aus den vorgenannten Patentanmeldungen (P37 01 027.1; WO 88/05512) bekannten Bezeichnungen definiert. Eine Beschreibung der bekannten Anordnung im unteren Bereich der Ventilvorrichtung erübrigt sich daher.

Gleichwohl stellt die in den Figuren 1 bis 3 dargestellte Ventilvorrichtung nicht einfach eine Addition von zwei an sich aus den vorgenannten Patentanmeldungen bekannten Ventilen dar. Abgesehen davon, daß allein die Kombination der beiden an sich bekannten Ventile eine, wie vorstehend bereits erläutert, völlig neue Ventilvorrichtung ausbildet, besteht der wesentliche Unterschied gegenüber der bloßen Kombination darin, daß ein einziges Verschlußteil 5 und miteinander gekoppelte Schließglieder 4 und 400 vorgesehen sind, wodurch die komplexe Ventilvorrichtung mit lediglich zwei voneinander verschiedenen Antriebsbewegungen, die über nicht gezeigte Mittel erzeugt werden, auskommt.

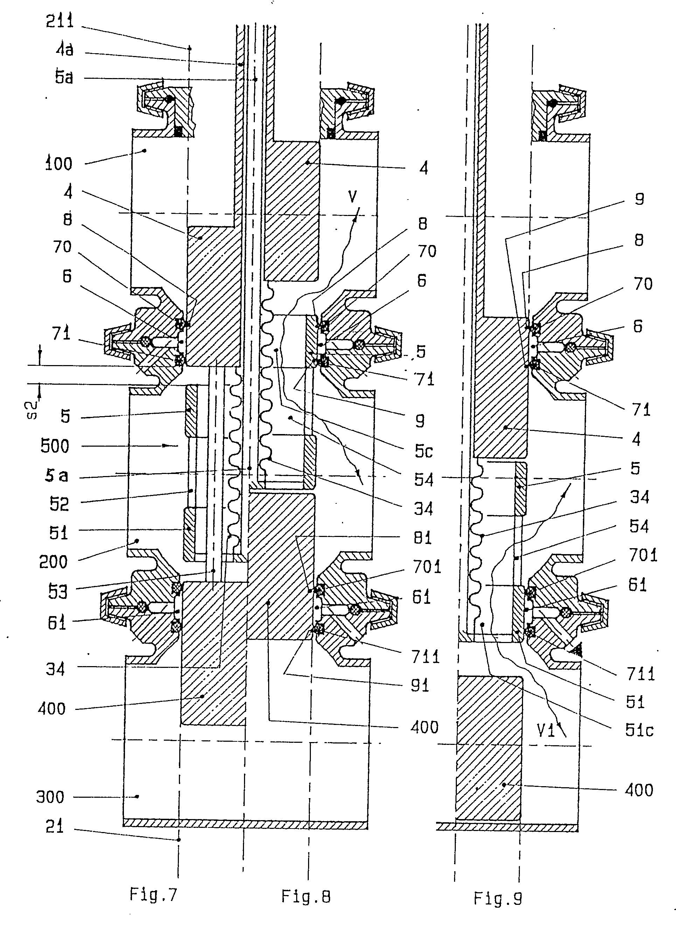

In den Figuren 4 bis 6 ist eine andere Ausführungsform der Vorrichtung gemäß der Erfindung in den drei möglichen Schaltzuständen, wobei letztere jenen der Figuren 1 bis 3 entsprechen, dargestellt. Die Ventilgehäuseteile 100, 200 und 300 und die zugeordneten Bauteile sind identisch mit jenen gemäß der Figuren 1 bis 3. Auf eine vollständige Bezeichnung wurde daher in diesen und den nachfolgenden Figuren verzichtet. Die Teile 4 und 400, 6 und 61, 8 und 81, 9 und 91, 70 und 701, 71 und 711 sind zwar noch im einzelnen gekennzeichnet, brauchen jedoch, da sie bei der Beschreibung der Figuren 1 bis 3 bereits erläutert wurden, nicht noch einmal hinsichtlich ihrer Bedeutung erwähnt werden. Im Unterschied zur Ausführung gemäß den Figuren 1 bis 3 ist bei der Ausführung gemäß den Figuren 4 bis 6 neben dem Verschlußteil 5 noch ein zweites Verschlußteil 51 vorgesehen. Das Verschlußteil 5 ist beispielhaft über einen Verbindungssteg 4c und das Verschlußteil 51 mit einem Verbindungssteg 400c mit dem jeweils zugeordneten Schließglied 4 bzw. 400 in einem Abstand s1 fest verbunden. Da das obere Schließglied 4 mit dem unteren Schließglied 400 wiederum über eine Stange 400a fest verbunden ist, kann die dargestellte Ventilvorrichtung über eine einzige Antriebsbewegung, die über nicht gezeigte Mittel erzeugt wird, geschaltet werden. Die Schaltbewegung von der Schließ in die jeweilige Offenstellung erfolgt allerdings nicht leckagefrei, da zwischen dem Verschlußteil und dem Schließglied 5, 51 bzw. 4, 400 der vorstehend erwähnte Abstand s1 vorgesehen ist. Die Verbindungsstege 4c bzw. 400c haben neben ihrer Verbindungsfunktion die Aufgabe, bei der Schaltbewegung von der Schließ- in die Offenstellung oder umgekehrt die jeweils zugeordneten Dichtungen 70, 71 bzw. 701, 711 in ihrer notwendigen Lage zu fixieren. In der in Figur 5 dargestellten Offenstellung gelangt die mit V bezeichnete Durchtrittsströmung vom Ventilgehäuseteil 200 über die Durchtrittsöffnung 5c und die Öffnungen 4b in das obere Ventilgehäuseteil 100. In der in Figur 6 dargestellten anderen Offenstellung gelangt die dort mit V1 bezeichnete Durchstrittsströmung in entsprechender Weise über eine Durchtrittsöffnung 51c und Öffnungen 400 b, die zwischen den Verbindungsstegen 400 c gebildet werden, vom mittleren Ventilgehäuseteil 200 in das untere Ventilgehäuseteil 300 oder umgekehrt. Die strichpunktierten Linien 21 und 211 kennzeichnen mögliche Ausgleichskolben, mit denen die Ventilvorrichtung versehen werden kann und die für einen völligen Druckausgleich am Schließglied 4, 400 sorgen.

Soweit bei der Ausführungsform gemäß den Figuren 7 bis 9 gleiche Bezeichnungen wie bei der Ausführungsform gemäß den Figuren 4 bis 6 vorliegen, sind die gleichermaßen gekennzeichneten Bauteile in Aufbau und Funktion auch völlig identisch. Daher wird in der nachfolgenden Figurenbeschreibung auch nur auf die Unterschiede in den Ausführungsformen hingewiesen. Die beiden Schließglieder 4 und 400 sind über wenigstens ein exentrisch angeordnetes zweites Verbindungsteil 53 miteinander verbunden. Der Antrieb des obenliegenden Schließgliedes 4, und damit auch des untenliegenden Schließgliedes 400, erfolgt über eine als Hohlstange ausgebildete Stange 4a. In dieser Hohlstange ist eine Stange 5a geführt, die mit einer Verschlußteileinheit 500 verbunden ist. Die Verschlußteileinheit 500 besteht aus den beiden Verschlußteilen 5 und 51, die wiederum über ein erstes Verbindungsteil 52 fest miteinander verbunden sind. Die Verschlußteileinheit 500 ist relativ beweglich zu den Schließgliedern 4, 400 angeordnet und kann insgesamt um einen zweifachen Abstand s2 Verschoben werden. Dieser zweifache Abstand s2 ergibt näherungsweise einen dem Nennquerschnitt der Ventilvorrichtung entsprechenden Öffnungsquerschnitt, wobei letzterer jeweils in den Offenstellungen des Ventils zwischen dem Verschlußteil 5 bzw. 51 und dem jeweils zugeordneten Schließglied 4 bzw. 400 ausgebildet wird. Ein zwischen der Stange 5a und dem Schließglied 4 gebildeter, nicht näher bezeichneter Durchdringungsspalt wird über einen Faltenbalg 34 stoffschlüssig überbrückt. Neben den für die vorstehend bereits genannte Durchtrittsströmung V bzw. V1 in den Verschlußteilen 5 bzw. 51 vorgesehenen Durchtrittsöffnungen 5c bzw. 51c sind zwischen den ersten Verbindungsteilen 52 zweite Durchtrittsöffnungen 54 vorgesehen, über die die vorstehend genannten Durchtrittsströmungen V und V1 aus der Verschlußteileinheit 500 in das sie umgebende Ventilgehäuseteil 200 oder umgekehrt jeweils hindurchtreten können. Die dargestellte Ausführungsform realisiert vollständig leckagefreie Schaltungsvorgänge der Ventilvorrichtung. Es sind dazu zwei voneinander unabhängige Antriebsbewegungen der Stangen 4a bzw. 5a erforderlich, die über nicht gezeigte Mittel angesteuert sind.

Die Figuren 10 bis 12 zeigen eine weitere Ausführungsform der Ventilvorrichtung gemäß der Erfindung. Es wird im nachfolgenden nur auf die Unterschiede gegenüber den vorangegangenen Figuren, insbesondere gegenüber den Figuren 4 bis 6, hingewiesen. Ebenso wie bei der Ausführungsform gemäß den Figuren 4 bis 6 befinden sich die Verschlußteile 5 und 51 in fester Verbindung gegenüber dem Schließglied 401, das in einem einzigen Bauteil zusammengefaßt ist und nunmehr außenseits die Verschlußteile 5 über den Verbindungssteg 4c und das Verschlußteil 51 über den Verbindungssteg 400c trägt. Der Abstand zwischen dem Verschlußteil 5 bzw. 51 und dem Schließglied 401 beträgt wiederum s1. Der übrige Aufbau der Ventilvorrichtung und seine Wirkungsweise ist im übrigen völlig identisch mit jener gemäß den Figuren 4 bis 6. Eine weitere Beschreibung und Erläuterung erübrigt sich daher.

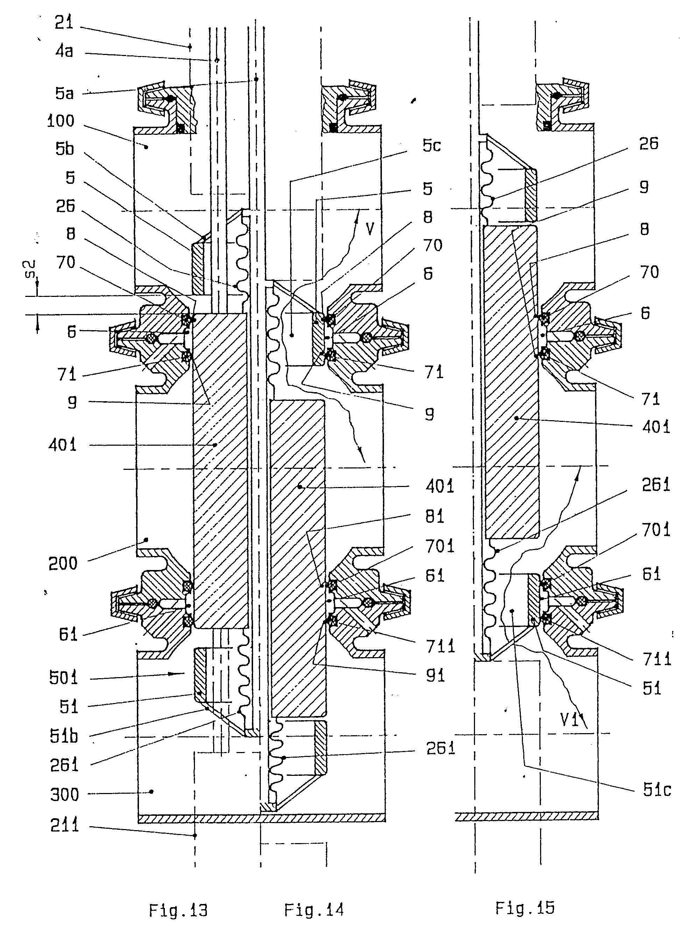

Die Ausführungsform gemäß den Figuren 13 bis 15 erklärt sich hinsichtlich ihres grundsätzlichen Aufbaues durch den unmittelbaren Vergleich mit der Ausführungsform gemäß den Figuren 10 bis 12 und hinsichtlich der Funktion und Arbeitsweise ihrer Verschlußteile 5 und 51 über den Vergleich mit der Ausführungsform gemäß den Figuren 7 bis 9. Das einzige Schließglied 401 wird nunmehr über wenigstens eine exzentrisch angeordnete Stange 4a angetrieben. Die Verschlußteile 5 und 51 sind über eine Stange 5a miteinander verbunden, die über nicht gezeigte Mittel angesteuert wird. Jedes Verschlußteil 5 bzw. 51 ist über einen Steg 5b bzw. 51b mit dieser Stange verbunden. Die Verschlußteile 5 und 51, die Stange 5a und die Stege 5b und 51b bilden zusammen eine Verschlußteileinheit 501, die relativ beweglich gegenüber dem Schließglied 401 verschoben wird.

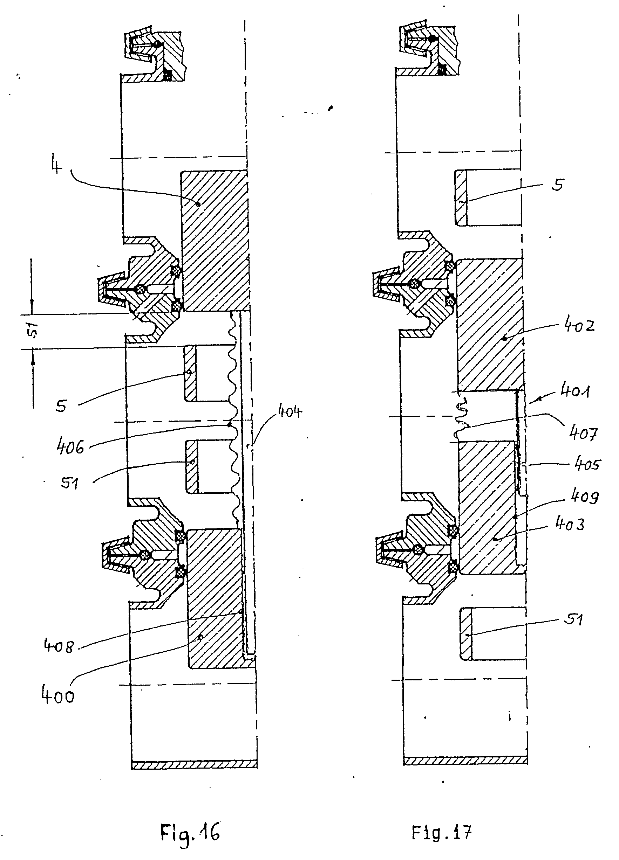

Von der einen Offenstellung in die andere Offenstellung der Ventilvorrichtung beträgt der erforderliche Verschiebeweg insgesamt einen zweifachen Abstand s2, wobei dieser in der Offenstellung näherungsweise einen dem Nennquerschnitt der Ventilvorrichtung entsprechenden Öffnungsquerschnitt bildet. Eine nicht näher bezeichnete obere und untere Durchdringungsstelle zwischen der Stange 5a und dem Schließglied 401 wird jeweils über einen Faltenbalg 26 bzw. 261 stoffschlüssig überbrückt. Diese Faltenbälge 26, 261 besitzen in der Grundstellung der Ventilvorrichtung (Figur 13) ihre spannungsfreie Einbaulage, während sie in den Offenstellungen der Ventilvorrichtung wechselweise gestreckt (26 in Figur 14 und 261 in Figur 15) bzw. gestaucht (261 in Figur 14 und 26 in Figur 15) sind.

Die in den Figuren 1 bis 15 gezeigte Ventilvorrichtung kann mit Hilfe der aus den vorstehend genannten Patentanmeldungen P 3701027.1 und WO 88/05512 bekannten Merkmale für Dichtungen. Leckagehohlräume, Verschlußteile und Schließglieder sowie zugehörige Steuerteile realisiert werden.

In den Figuren 16 und 17 ist eine Ausführungsform der Ventilvorrichtung gezeigt, in der das Schließglied 4, 400 (Figur 16) bzw. das Schließglied 401 (Figur 17) in seiner axialen Erstreckung durch teleskopartig arbeitende Vorkehrungen 404, 408 bzw. 405, 409 verändert wird. Mit 404 ist eine Teleskopstange und mit 408 eine erste Führungsbohrung gezeichnet. In Figur 17 tragen diese Bauteile die Bezeichnung 405 und 409. Der Abstand der Schließglieder 4 und 400 (Figur 16) bzw. des ersten und des zweiten Schließgliedteiles 402 und 403 (Figur 17) wird durch ein elastisches Verbindungselement 406 bzw. 407 stoffschlüssig überbrückt.

Durch diese beiden Ausführungsformen ist es möglich, die jeweilige Ventilvorrichtung in ihrer Grundstellung ambivalent hinsichtlich des Schaltzustandes der beiden äußeren Ventilgehäuseteile gegenüber dem mittleren Ventilgehäuseteil auszustatten. Bei kurzem Abstand der Schließglieder 4, 400 bzw. 402, 403 voneinander ist die Ventilvorrichtung in ihrer Grundstellung geschlossen, bei größtmöglichem Abstand ist sie in der Grundstellung offen.

Liste der Bezeichnungen

100, 200, 300 Ventilgehäuseteile
2a/2a1 Ablauföffnung
3 Gehäuseverschlußteil
4/400/401 Schließglied
4a/400a Stange
4b/400a Öffnungen
4c/400c Verbindungsstege
402 erstes Schließgliedteil
403 zweites Schließgliedteil
404 erste Teleskopstange
405 zweite Teleskopstange
406 erstes elastisches Verbindungselement
408 erste Führungsbohrung
409 zweite Führungsbohrung
5/51 Verschlußteil
501/500 Verschlußteileinheit
5a Stange
5b/51b Stege
5c/51c Durchtrittsöffnung
52 erstes Verbindungsteil
53 zweites Verbindungteil
54 zweite Durchtrittsöffnung
6/61 Leckageraum
70/701 erste Dichtung
71/701 zweite Dichtung
8/81 erste Abdichtungsstelle
9/91 zweite Abdichtungsstelle
12 Gehäusedichtung

13 Verbindungsmittel

15/151 Anschlußöffnung

16/161 Kanal

18/181 Sammelkanal

21/211 erster Ausgleichskolben

26/261 erster Faltenbalg

34 Faltenbalg

I/I1 Eintritt der Reinigungsflüssigkeit

II/II1 Austritt der Reinigungsflüssigkeit/Leckage

V/V1 Durchtritts- oder Rohrströmung

## Ansprüche

1. Verfahren zur Steuerung des Mediumeintrittes in wenigstens einen Leckageraum einer Ventilvorrichtung, bei welcher drei Ventilgehäuseteile mit Zu- und Ablaufgehäuseteilen in Reihenanordnung vorgesehen sind, wobei wenigstens zwei Ventilgehäuseteile durch zwei seriell angeordnete Abdichtungsstellen voneinander getrennt sind, und der Leckageraum zwischen den zugehörigen Abdichtungsstellen mit der Umgebung des Ventils verbunden und sowohl in der Schließ- als auch in der Offenstellung des Ventils von den Innenräumen der Ventilgehäuseteile abgesperrt ist, bei welcher den Abdichtungsstellen ein Schließglied und ein Verschlußteil mit Innendurchgang zugeordnet sind, wobei das Schließglied schieberartig ausgebildet und translatorisch oder rotativ, und das Verschlußteil in Richtung des Bewegungsfreiheitsgrades des Schließgliedes verschiebbar ist, und bei welcher die Abdichtungsstelle durch eine gehäuseseitig angeordnete, mit dem Schließglied oder dem Verschlußteil zusammenwirkende Dichtung gebildet ist, dadurch gekennzeichnet, daß eine Grundstellung vorgesehen ist, in der die Ventilvorrichtung vom mittleren Ventilgehäuseteil aus entweder beiderseits (5/3-Wegeventil) bzw. einerseits offen (5/2-Wegeventil) oder beiderseits geschlossen (5/3-Wege-Ventil) ist, und daß in der von der Grundstellung abweichenden Stellung am jeweils umgeschalteten Ventilsitz eine Substitution des den Leckageraum von dem Innenraum jeweils absperrenden Schließgliedes bzw. Verschlußteils durch das jeweils andere vorgesehen wird.

2. Verfahren zur Steuerung des Mediumeintrittes in einen Leckageraum einer Ventilvorrichtung, ausgestaltet nach dem Oberbegriff des Anspruchs 1 und mit einem weiteren Sitzbereich mit nur einer Abdichtungsstelle oder zur Steuerung von zwei Sitzbereichen mit jeweils nur einer Abdichtungsstelle zwischen den benachbarten Ventilgehäuseteilen, dadurch gekennzeichnet, daß eine Grundstellung vorgesehen ist, in der die Ventilvorrichtung vom mittleren Ventilgehäuseteil aus entweder beiderseits (5/3-Wegeventil) bzw. einerseits offen (5/2-Wegeventil) oder beiderseits geschlossen (5/3-Wegeventil) ist, und daß in der von der Grundstellung abweichenden Stellung am jeweils umgeschalteten Ventilsitz eine Substitution des den Leckageraum bzw. die Abdichtungsstelle von dem Innenraum jeweils absperrenden Schließgliedes bzw. Verschlußteils durch das jeweils andere vorgesehen wird.

3. Ventilvorrichtung nach Anspruch 1, dadurch gekennzeichnet, daß der Sitzbereich zwischen zwei benachbarten Ventilgehäuseteilen (100, 200 und 200, 300) jeweils mit einem Leckageraum (6 bzw. 61) ausgebildet ist (Fig. 1 bis 17).

4. Ventilvorrichtung nach einem der Ansprüche 1 bis 3, dadurch gekennzeichnet, daß in Schließstellung des Ventils die Leckageräume (6,61) und/oder Abdichtungsstellen durch jeweils ein Schließglied (4,400) und daß in den beiden anderen Stellungen des Ventils die Leckageräume (6, 61) und/oder Abdichtungsstellen durch einen Verschlußteil (5, 51 oder 500) mit Innendurchgang von den Innenräumen der Ventilgehäuseteile (100, 200; 200, 300) abgesperrt werden (Fig. 1 bis 9 und Fig. 16).

5. Ventilvorrichtung nach einem der Ansprüche 1 bis 3, dadurch gekennzeichnet, daß in Schließstellung des Ventils die Leckageräume (6, 61) und/oder Abdichtungsstellen durch ein Schließglied (401) und daß in den beiden anderen Stellungen des Ventils die Leckageräume (6, 61) durch jeweils ein Verschlußteil (5,51 oder 501) mit jeweils einem Innendurchgang von den Innenräumen der Ventilgehäuseteile (100, 200; 200, 300) abgesperrt werden (Fig. 10 bis 15 und Fig. 17).

6. Ventilvorrichtung nach Anspruch 4, dadurch gekennezeichnet, daß die Schließglieder (4,400) über eine Stange (400a 53) fest miteinander verbunden sind (Fig. 4 bis 9).

7. Ventilvorrichtung nach einem der Ansprüche 4 bis 6, dadurch gekennzeichnet, daß die Verschlußteile (5 und 51) mit dem Schließglied (4,400; 401) in einem Abstand (s1) fest verbunden sind (Fig. 4 bis 6, Fig. 10 bis 12).

9

8. Ventilvorrichtung nach Anspruch 7, dadurch gekennzeichnet,

daß der Abstand (s1) näherungsweise einen dem Nennquerschnitte der Ventilvorrichtung entsprechenden Öffnungsquerschnitt ergibt.

9. Ventilvorrichtung nach einem der Ansprüche 4 bis 6, dadurch gekennzeichnet,

daß die Verschlußteile (5 und 51) zu einer Verschlußteileinheit (500 bzw. 501) zusammengefaßt sind, wobei letztere relativ beweglich zu dem Schließglied (4, 400, 401) über eine Stange (4a) insgesamt um einen zweifachen Abstand (s2) verschoben wird (Fig. 7 bis 9 und Fig. 13 bis 15).

10. Ventilvorrichtung nach Anspruch 9, dadurch gekennzeichnet,

daß der zweifache Abstand (s2) näherungsweise einen dem Nennquerschnitt der Ventilvorrichtung entsprechenden Öffnungsquerschnitt ergibt.

11. Ventilvorrichtung nach einem der Ansprüche 4 bis 10, dadurch gekennzeichnet,

daß das Schließglied (4, 400; 401) in seiner axialen Erstreckung durch teleskopartig arbeitende Vorkehrung (404, 408; 405, 409) verändert wird, wobei der Abstand der Schließglieder (4, 400; 402, 403) durch ein elastisches Verbindungselement (406; 407) stoffschlüssig überbrückt wird (Fig. 16 und 17).

12. Ventilvorrichtung nach Anspruch 1 oder 2, dadurch gekennzeichnet,

daß das Schließglied (4, 400;), Verschlußteil (5), Abdichtungsstellen (8, 9, 81, 91), Leckageräume (6, 61) Ausgleichskolben und Dichtungen der Antriebsteile von Schließglied und Verschlußteil nach mindestens einem der Ansprüche 4 bis 51 und 54 bis 65 der Patentanmeldung WO 88/05512 ausgebildet sind (Figuren 1 bis 17).

Fig.1    Fig.2    Fig.3

EP 0 334 401 A2

Fig.4              Fig.5              Fig.6

Fig.7          Fig.8          Fig.9

Fig.10          Fig.11          Fig.12

21
4a
5a
100
5b
5
26
8
70
s2
6
71
9
401
200
61
501
51
51b
261
300
211

5c
5
8
70
6
V
71
9
401
81
701
61
711
91
261

26
9
8
70
6
71
401
261
701
61
711
51
V1
51c

Fig.13          Fig.14          Fig.15

Fig. 16

Fig. 17